# EUROPEAN PATENT APPLICATION

(11) **EP 4 455 575 A1**
(43) Date of publication of application: **30.10.2024**
(21) Application number: 24171831.1
(22) Date of filing: 23.04.2024
(51) Int. Cl.: F24T 10/15, E21B 19/08

(54) **HOSE FEEDING DEVICE**

(30) Priority: 28.04.2023 SE 2350513
(71) Applicant: Sveaslang AB, 655 98 Molkom (SE)
(72) Inventor: KARLSSON, Sten Åke, Kil (SE); ÅHLIN, Tim, Kil (SE); ERIKSSON, Ludvig, Fagerås (SE)
(74) Representative: Bjerkén Hynell KB

(57) **Abstract**

The present invention relates to a hose feeding device for lowering hoses 3 for geothermal heating or the like into a borehole 2 in the ground, whereby the hose feeding device 1 has a housing body 5 supporting a drive device 4 comprising a drive shaft 43, which drives at least one drive package 6 comprising a plurality in a feed line one after the other rotatable, separate drive rollers 60, which exert a feeding force on a pair of hoses 3, wherein said plurality of separate drive rollers 60 comprise a first drive roller 60 driven by said shaft 43 and at least one of said driven drive roller 60 via at least one drive belt 61 driven second drive roller 60 which exerts said feed force directly on said pair of hoses 3, whereby said casing body 5 comprises a bottom plate 51 which connects two side plates 50 between which said drive rollers 60 are arranged above said bottom plate 51 and that the fastening devices of the drive rollers 60 are arranged in said side plates 50 and thereby reinforces the casing body 5.

## Description

The present invention relates to a hose feeding device for lowering hoses for geothermal heating or the like into a borehole in the ground, the device having a motor that drives at least one drive wheel, which in turn exerts a feeding force on a pair of hoses.

### BACKGROUND

To use geothermal energy for heating purposes, for example, a pair of hoses is usually lowered into a borehole in the ground. The individual hoses included in the hose pair are joined at the end which is first brought down into the borehole in such a way that a heat-transferring liquid can be pumped from a heat pump down one hose and up into the other hose. Hose feeding devices for lowering a pair of hoses are previously known, but known machines exhibit various disadvantages in terms of handling and/or maintenance.

From SE 532126, such a hose feeding device is previously known. A major disadvantage is that this is heavy and that it therefore requires a wheeled frame for movement, which in turn makes the machine very bulky. In addition, there are detailed solutions which mean that close maintenance is necessary to keep the machine in operable condition.

From US 5934 537 there is known a simple hose feeding device intended for feeding only one hose at a time, whereby a simple feeding principle is used, comprising three inflatable drive wheels, which jointly press and drive a hose in a single place, which feeding principle is usually insufficient to provide sufficient reliability.

### SUMMARY OF THE INVENTION

The purpose of the present invention is to create a hose feeding device that eliminates or at least minimizes at least one of the disadvantages found with today's known machines, which is achieved with a hose feeding device according to the attached patent claims.

Thanks to the invention, many advantages can be obtained. On the one hand, the newly developed design means that a significantly easier-to-handle machine is provided, i.a. in that the construction enables a significantly reduced weight. Thanks to the low weight, a wheeled transport device is not needed, which facilitates handling and significantly reduces the space required during transport. In addition, the drive package has been further developed to be able to achieve low weight and to conveniently be powered by battery, which increases mobility and flexibility, while the new concept including battery can result in lower weight.

Furthermore, internal details have been further developed so that longer service life can be obtained, which results in lower cost and less need for service. Furthermore, there are new included details that can provide better adaptation to winter conditions, which allows easier and safer handling even in winter.

The term hose pair here normally means two hoses that are handled as a unit. However, it is within the scope of the invention that a hose pair can comprises a single hose, which has two channels inside.

### OVERVIEW FIGURE DESCRIPTION

In the following, the invention will be described in more detail with reference to the attached figures, in which:
Fig. 1 shows a perspective view of a hose feeding device according to the invention arranged at a feed pipe,
Fig. 2 shows a schematic perspective view of engine with transmission,
Fig. 3 shows a perspective view of the main part of the hose feeding device,
Fig. 4 shows a side view of a drive wheel according to an embodiment of the invention,
Fig. 5 shows a cross-section along the line A-A in Fig. 4.

### DETAILED DESCRIPTION

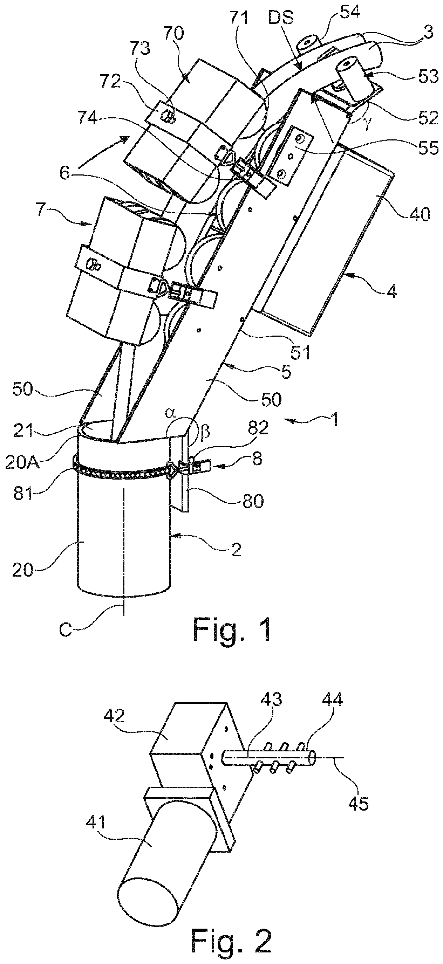

In Fig. 1, a hose feed device 1 according to the invention is shown arranged at a casing pipe 2. A pair of hoses 3 is found at the hose feed device 1 for feeding down into a borehole by means of the casing pipe 2. It is shown that the hose feed device 1 comprises a drive device 4 and a casing body 5 and drive wheel package 6 and back pressure package 7. The drive arrangement 4 preferably comprises a battery unit 40 which drives a motor 41 (see Fig. 2) which in turn drives a gearbox 42, which in turn drives an output shaft 43, around a rotation shaft 45. The part of the output shaft 43 protruding from the gearbox 42 is equipped with fixing means 44. Preferably, a DC electric motor of a compact type is used, with an output of over 3 kW and a speed between 1000 - 2000 rpm, and a gearbox 42 with a gear ratio in the range 1:15 - 1:60, preferably worm gear.

The hose feeding device 1 is attached to the feed pipe 2 by means of a fastening device 8. The fastening device 8 comprises a counter-holding plate 80 and a. The counter-holding plate 80 protrudes at the bottom of the hose feeding device 1 and is conveniently attached to a lower part of a bottom plate 51 of the housing body 5. The counter-holding plate 80 is provided with the clamping device 81, 82. The counter-holding plate 80 is clamped in contact with the outside of an upper projecting part of the feed pipe 20. comprises a flexible tensioner part 81 which can be arranged around the outer side of the feed pipe 20. With the help of a tensioner 82, the flexible tensioner part 81 can be tensioned so that the hose device 1 with its holder plate 80 is tensioned in contact with the feed pipe.

The housing casing 5 comprises two side plates 50 and a bottom plate 51 which form a U so that an open connection is formed between the hose feeder device 1 and the opening 21 to the borehole 2, in that the casing body 5 has its U-shaped part in connection with the opening 21 at the upper part of the feed pipe 20. The main feeding direction of the hoses is along the longitudinal extension of the bottom plate 51 (e.g. parallel to), i.e. the main feeding direction may as shown in the figures extends parallel to, or substantially parallel to, a bottom plane which is parallel to the bottom plate 51. Preferably, the lower edge 50A of the side plates is arranged at an angle α, so that the longitudinal extent of the hose feeding device (which is parallel to the longitudinal extent of the bottom plate 51) forms this angle α in relation to the center line C of the feed pipe 2, which is obtained in that the upper surface of the feed pipe is flat and essentially horizontal. In this way, some help is obtained from the thin force to bring the hoses 3 into gripping contact with the drive wheel package 6, which extends longitudinally inside the housing body 5. In addition, a good angle is made possible for feeding the hoses 3 via the hose feeder device 1 down into the borehole 2 (which is essentially vertical).

Inside the housing body 5 between the side plates 50, the drive package 6 is arranged, which includes a plurality of drive rollers 60, which are arranged with peripheral surfaces adapted to grip a pair of parallel arranged hoses 3. In order to apply a clamping force against the drive package 6 via the hoses 3, there are arranged at least one counter pressure device 7, which also includes rollers 71 adapted with a peripheral shape that is adapted to the hoses 3.

The counter pressure device 7, preferably a plurality, comprises a U-shaped outer body 70 inside which are arranged a plurality of counter pressure rollers 71A. Arranged at the housing 70 is a tensioning device 72, with a tensioning member 74 which makes it possible to removably tension the counter pressure device 7 against a pair of hoses 3, so that the pair of hoses 3 with adjustable pressure by means of the counter-pressure rollers 71 can be pressed against the drive rollers 60. An adjustment device 73 is conveniently provided which makes it possible to easily adjust the tensioning force without the need to disconnect the tensioning member 74.

At the input part of the hose feeding device 1, a control mechanism 53 is suitably arranged, the purpose of which is to control the respective hose 3 towards the drive wheel package 6 in the desired manner. Conveniently, the steering device 53 includes a plate 52 which is preferably angled γ in relation to the bottom plate 53 of the body 5, so that a kind of radius is formed when feeding the hoses 3 into the drive wheel package 6. The steering package 53 conveniently includes guide rollers 54 that hold the hoses 3 on place sideways.

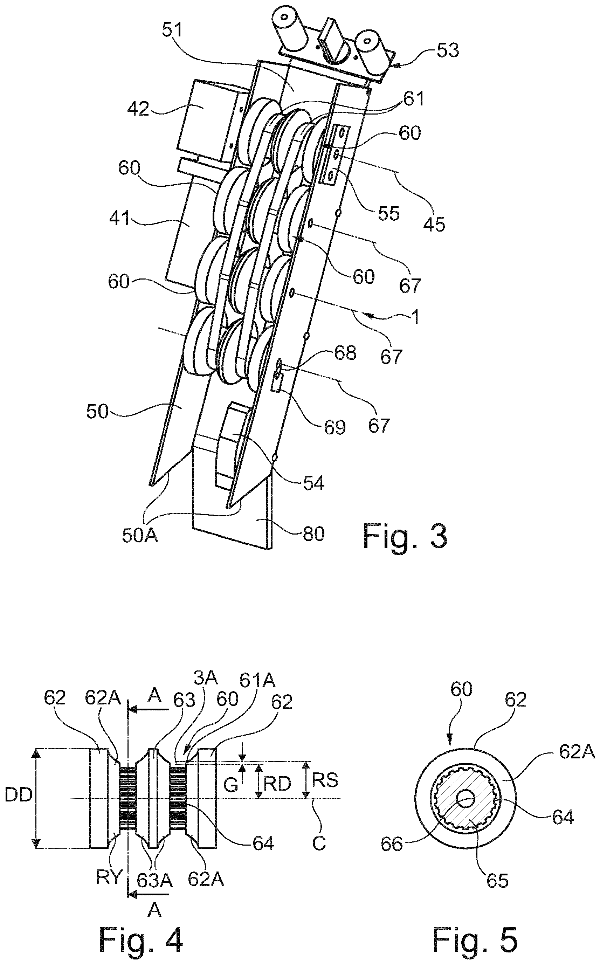

In Fig. 3, the casing body 5 of the hose feeding device 1 is shown and without the counter-pressure means 7. It can be seen that the drive wheel package 6 comprises a plurality of drive rollers 60, whose rotation axes 45, 67 are arranged transversely in relation to the longitudinal extent of the body 5, whereby resp. shaft end is connected with a resp. side wall 50. A first, uppermost drive roller 60 is arranged at the drive shaft 43, as shown in Fig.2. Fixing means 44 are arranged to ensure that the drive roller 60 is rotationally fixed to the drive shaft 43. It also appears that the first drive roller 60 is in driving connection with a drive belt 61, which drive belt 61 then drives a further number of drive rollers 60. Furthermore, it appears that the rotation axes 45, 67 of the outer rollers 60 are preferably arranged at a lower height in relation to a bottom plane containing the bottom plate 51 than the rotation axes 45, 67 of the inner rollers 60, whereby the hose contact surfaces of the drive wheel package 6 form a curvature adapted to the kind of curvature that the hoses form when feeding down. Conveniently, the non-driven shafts shown with rotary shaft ref. 67 fixed axles, which contributes to extra stability. Conveniently, needle roller bearings are used to support the rollers 60 at these fixed axes.

In Figure 3, it is also indicated that the lower roller 60 has its shaft ends adjustably arranged along a longitudinally arranged slot 68 in the side walls 50. By having the shaft ends attached with an adjusting device 69 (e.g. by means of threads) on each side can thereby the tension in the drive belt 61 is adjusted.

Fig. 4 shows a side view of a drive roller according to a preferred embodiment according to the invention. It can be seen that the drive roller 60 comprises two in relation to a central axis C radially projecting lateral edge bodies 62 and a centrally arranged radially projecting center body 63. Between opposite parts of these radially projecting bodies 62, 63 are arranged drive surfaces 62A, 63A which have a radius R adapted to that dimension, e.g. outer diameter DS, of hose 3 to be fed.

Between the drive surfaces 62A and 63A and radially inwards from these are arranged drive teeth 64, which are intended to be in engagement with the drive belt 61. Thanks to the drive teeth 64 and the drive belt 61, the first driven roller 60 can therefore transmit driving force to at least one further drive roller 60, preferably one several drive pulleys 60. The drive belt 61 in engagement with the drive teeth 64 is arranged with an outer peripheral surface 61A at a radius RD which is smaller than the radius RS which reaches the lower periphery 3A of which a hose 3 is placed during feeding, said radii RD, RS emanate from the central axis A of the roller 60. This difference in radius means that there is a gap G which is large enough to provide space with a margin for the lower periphery 3A of the hoses 3 not to come into contact with the upper surface 61A of the drive belt 61. This eliminates unwanted wear of the drive belt 61, which would otherwise occur if the drive belt was in contact with the drive belt 61.

The radius RY used to shape the driving surfaces 62A, 63A is suitably slightly smaller than the hose radius, i.e. D/2 > RY, which will affect the grip of the hose 3 in a positive way, i.e. in that a greater contact force is created between the hose and drive surfaces 62A and 63A, whereby the rollers 60 will be able to grip the hoses 3 better, i.e. with higher clamping force and friction during the drive.

In Fig. 5, a cross-section according to the line A-A in Fig. 4 is shown. It appears that the drive roller 60 preferably comprises a homogeneous cylindrical body part 65, a kind of inner core 65 which is continuous in the axial joint of the drive roller 60 and which has a central hole 66 for a shoulder. The drive roller 60 is preferably cast or 3D printed in a durable and grippy material, preferably polyurethane, which provides a strong and durable drive roller as well as a strong and durable friction surface in the drive surfaces 62A, 63A. Alternatively, part of the drive roller can be made of a first material, e.g. the core 65 in aluminium, and apply the projecting bodies 62, 63 in another material, e.g. polyurethane.

It is understood that the protection is not limited by what is described above, but that for the person skilled in the art there are many variation possibilities within the scope of the patent claims. As an example, it is understood that fewer than four or more than four rollers 60 can be used, and that if three or more than three rollers are used, these can be arranged at adapted heights to form a radius of the driving surfaces which improves the driving of the hoses 3 and/or gives less load on parts included in the hose feeder device 1. Furthermore, it is realized that varying types of electric motors can be used (e.g. also AC) and that also varying types of gearboxes, (e.g. planetary gear). In addition, it is understood that instead of toothed belt 61, a chain or belt wedge, or the like, can also be used as drive means 61

## Claims

1. Hose feed device for lowering hoses (3) for geothermal heating or the like into a borehole (2) in the ground, whereby the hose feed device (1) has a casing body (5) supporting a drive device (4) comprising a drive shaft (43), which drives at least one drive wheel package (6) comprising a plurality of rotatable, separate drive rollers (60) arranged one behind the other in the feed direction , which in cooperation with a counter pressure device (7) exert feed force along a bottom plane of said casing body (5) the feed direction on a pair of hoses (3), wherein said plurality of separate drive rollers (60) comprise a first drive roller (60) driven by said shaft (43) and at least one of said driven drive rollers (60) via at least one drive means (61) driven second drive roller (60) which exerts said feeding force directly on said pair of hoses (3), **characterized in that** said housing body (5) includes a bottom plate (51) arranged along said bottom plane which connects two side plates (50) between said drive rollers (60) are arranged above said bottom plate (51) and that the attachment devices of the drive rollers (60) are arranged in said side plates (50) and thereby reinforce the casing body (5).

2. Hose feeding device according to claim 1, **characterized in that** said drive belt (61) is arranged to engage with a drive track (64) which is arranged radially inwards and centrally between two opposing drive surfaces (62A, 63A) arranged for a hose of said drive roller (60), wherein preferably said drive path (64) and drive means (61) are arranged so that the peripheral surface (61A) of the drive means (61) is arranged at a radius (RD) in relation to said central axis (C) which is below the minimum radius (RS) at which a lower surface (3A) of the hose (3) is in driving engagement with said drive surfaces (62A, 63A), whereby there is a gap (G) between the hose (3) and the drive member (61) ) so that contact is avoided.

3. Hose feeding device according to claim 1, **characterized by** said side plates (50) of said support frame (5) are arranged with lower end surfaces (50A) which constitute support surfaces intended to rest against an upper end surface (20A) of an upper feed pipe (20) where preferably said end surfaces (50A) form an obtuse angle (α) in relation to said bottom plate (51), whereby more preferably said obtuse angle (α) is in the range 110°-160°, most preferably 125°- 145°.

4. Hose feeding device according to claim 1 or 3, **characterized in that** at a lower end of said bottom plate (51) there is arranged a fastening arrangement (8) for fastening the hose feeding device (1) to an upper part of a feed pipe (20).

5. Hose feeding device according to claim 4, **characterized in that** said fixing arrangement (8) comprises a support member (80) arranged to abut against an outer surface of an upper feed pipe part (20), whereby preferably said support member (80) extends in a blunt angle (β) in relation to said bottom plate (51), whereby more preferably said obtuse angle (β) is in the range 110°-160°, most preferably 125°-145°.

6. Hose feeding device according to claim 4 or 5, **characterized in that** said attachment arrangement (8) comprises a holder support (54) with a lower part arranged to project downwards along an inner surface of an upper feed pipe part (20).

7. Hose machine according to patent claim 1, **characterized in that** said drive roller/s (60) comprise a homogeneous core (65) with a centrally arranged axial hole (66) and two edge bodies (62) projecting radially from the core (65) and one from -nan (65) between said edge bodies (62) arranged radially projecting center body (63), whereby said edge bodies (62) are each arranged with an inwardly directed drive surface (62A) and said center body (63) is arranged with two in different directions -directed drive surfaces (63A).

8. Hose feeding device according to patent claim 7, **characterized in that** at least some, preferably all, of said drive rollers (60) are made of one and the same homogeneous material, preferably polyurethane.

9. Hose feeding device according to claim 7 or 8, **characterized in that** said drive surfaces (62A, 63A) are arranged with a radius (R) that is smaller than the radius (DS/2) of the hose (3) that the drive roller 60 is intended to drive .

10. Hose feeding device according to claim 7, 8 or 9, **characterized in that** said driving surfaces (62A, 63A) have an extension in a transverse direction that follows a radius (RY) and that each of said driving surfaces forms a circular arc that is less than 90°, for preferably less than 80°, more preferably less than 70°.

11. Hose feeding device according to claim 6, 7 or 8, **characterized in that** said drive rollers (60) are three or more in number and that the rotation axes (45, 67) are arranged at different levels in relation to a longitudinal axis of said housing body (5) so that their driving surfaces form a radius adapted to the curvature of the hoses (3) during operation.

12. Hose feeding device according to claim 1, **characterized in that** said counter pressure device (7) comprises a, preferably U-shaped, outer housing (70) inside which a number of counter-pressure rollers (71A) are arranged.

13. Hose feeding device according to claim 12, **characterized in that** arranged at said housing (70) there is a tensioning device (72), with a tensioning member (74) arranged to enable removable tensioning of the counter pressure device (7) against a pair of hoses (3).

14. Hose feeding device according to patent claim 13, **characterized in that** said tensioning device (72) includes an adjustment device (73) arranged to enable simple adjustment of the tensioning force without the need to disengage the tensioning member (74).
